# EUROPÄISCHE PATENTANMELDUNG

(11) **EP 0 632 561 A2**
(43) Veröffentlichungstag der Anmeldung: **04.01.1995**
(21) Anmeldenummer: 94108464.2
(22) Anmeldetag: 01.06.1994
(51) Int. Cl.: H02J 1/10, G05F 1/59

(54) **Stromversorgungsanordnung**

(30) Priorität: 04.06.1993 DE 4318652
(71) Anmelder: HEINZINGER ELECTRONIC GmbH, D-83026 Rosenheim (DE)
(72) Erfinder: Lohr, Georg, Dr., D-83071 Stephanskirchen (DE)
(74) Vertreter: Heim, Hans-Karl, Dipl.-Ing.

(57) **Zusammenfassung**

Eine Stromversorgungsanordnung weist zumindest zwei voneinander abhängig gesteuerte Stromversorgungen auf, von denen jede eine Steuereinheit aufweist. Weiterhin ist ein Bus vorgesehen, über den die Steuereinheiten miteinander zum Austausch digitaler Signale verbunden sind.

## Beschreibung

Die Erfindung betrifft eine Stromversorgungsanordnung mit zumindest zwei voneinander abhängig gesteuerten Stromversorgungen.

Üblicherweise erfolgt die Steuerung der Ausgangsgrößen (Strom oder Spannung) einer Stromversorgung über analoge Sollwertvorgaben eines gemeinsamen Reglers oder einer Stromversorgung mit der höchsten Priorität. Es sind aber auch Steuerungen für Stromversorgungen bekannt, bei denen sich mehrere Stromversorgungen selbst steuern können. Aus der DE 39 32 437 ist eine Parallelschaltung mehrerer Stromversorgungen bekannt, wobei die Stromversorgungen über eine zentrale Steuereinrichtung miteinander verbunden sind, welche für eine gleichmäßige Stromabgabe sorgt. Eine Voraussetzung dafür ist die Parallelschaltung der Stromversorgungen, welche einen gemeinsamen Massebezug besitzen müssen.

Alle bekannten Verfahren der Steuerung mehrerer voneinander abhängiger Stromversorgungen mittels analoger Schaltungstechnik besitzen die typischen Nachteile, die einer analogen Signalübermittlung anhaften. Zum einen ist eine Potentialtrennung, wie sie zum Beispiel bei der Serienschaltung von Stromversorgungen unbedingt notwendig ist, nur mit hohem Aufwand realisierbar und zum anderen ist eine analoge Signalübertragung immer gegen Störungen empfindlich. Derartige Störungen können von außen eingestreut werden oder auch von der Stromversorgung selbst herrühren. Besonders groß ist die Gefahr der Störungen bei Schaltnetzteilen, aufgrund der hohen Störpegel.

**Aufgabe** der Erfindung ist es, eine Stromversorgungsanordnung der eingangs genannten Gattung derart auszubilden, daß eine störungsfreie Steuerung der einzelnen Stromversorgungen auch bei hohen Stromstärken ohne aufwendige und teure Potentialentkopplung möglich ist.

Diese Aufgabe wird gemäß dem kennzeichnenden Teil des Patentanspruchs 1 dadurch gelöst, daß jede Stromversorgung eine Steuereinheit aufweist und daß ein Bus vorgesehen ist, über den die Steuereinheiten miteinander zum Austausch digitaler Signale verbunden sind.

Dadurch, daß die Stromversorgungen Steuereinheiten aufweisen, die untereinander mit Hilfe digitaler Signale kommunizieren, kann auf einfache und sichere, störungsfreie Weise durch beispielsweise den Austausch von Informationen über zumindest eine Ausgangsgröße diese entsprechend einer vorgegebenen Verteilung eingestellt und damit die Verteilung der Ausgangsgrößen untereinander geregelt werden. Die digitalen Signale zeichnen sich durch einen höheren Störabstand aus und können außerdem auf einfache Weise potential getrennt werden. Auch können bei der Erfindung die Stromversorgungen auf unterschiedlichem Potential liegen und eine Hochstromversorgung weitestgehend störungsfrei gesteuert werden.

Besonders vorteilhaft ist es, wenn zumindest eine weitere Steuereinheit vorgesehen ist, die keiner Stromversorgung zugeordnet ist und die über den Bus mit den anderen Steuereinheiten verbunden ist.

Durch dieses Hinzufügen mindestens einer weiteren Steuereinheit läßt sich die gesamte Stromversorgungsanordnung oder eine Gruppe von Stromversorgungen beeinflussen. So kann beispielsweise bei einer Serienschaltung mehrerer Stromversorgungen die Summenspannung aller in Serie geschalteter Stromversorgungen gesteuert werden.

Ist ein den Steuereinheiten gemeinsamer Bus vorgesehen, über den die Steuereinheiten parallel miteinander verbunden sind, so wird der Verkabelungsaufwand auf ein Minimum reduziert und die Erweiterung bzw. das Weglassen von Stromversorgungen ist besonders einfach durchführbar.

Besteht der Bus aus einzelnen Bus-Teilabschnitten, die jeweils zwei Steuereinheiten seriell miteinander verbinden, so können die Steuereinheiten seriell über den gemeinsamen Bus miteinander kommunizieren. In diesem Fall müssen die Steuereinheiten nicht bidirektional arbeiten, sondern es kann für Eingang und Ausgang eine separate Leitung verwendet werden.

Ist der Bus als Parallelbus ausgebildet und weist mehrere parallele Busleitungen zur Kommunikation auf, so können auf einfachste Weise, zum Beispiel binärcodiert, Informationen übertragen werden.

Ist der Bus als serieller Bus ausgebildet und weist eine oder zwei Leitungen zur Kommunikation auf, so kann beispielsweise eine Übertragung der Information mit Hilfe pulsbreitenmodulierter Signale besonders einfach durchgeführt werden. Dazu sind vorteilhafterweise die Steuereinheiten zur Erzeugung und Übertragung pulsbreitenmodulierter Signale über den Datenbus ausgebildet. Dazu kann vorteilhafterweise eine Stromversorgung als Master-Stromversorgung ausgebildet sein, die den Takt für alle anderen Stromversorgungen vorgibt. Dadurch ist eine Synchronisation aller Stromversorgungen möglich.

Vorteilhaft ist insbesondere, wenn zumindest eine Steuereinheit eine galvanische Trennung zum Bus besitzt. Für eine kostengünstige galvanische Trennung können beispielsweise zumindest zwei Steuereinheiten mindestens jeweils einen Optokoppler aufweisen. Eine andere Alternative ist der Einbau von zumindest jeweils einem Übertrager. Auch können die Steuereinheiten elektrooptische Wandler zur galvanischen Trennung aufweisen, und es können Lichtleiter zur Verbindung der Steuereinheiten vorgesehen sein. Dieses ist insbesondere deswegen durchführbar, da die Bus-Systeme der Erfindung ausschließlich Digitalinformationen übertragen.

Denkbar ist auch eine zentrale Steuereinheit für mehrere Stromversorgungen, die ebenfalls digital über entsprechende Bus-Leitungen gesteuert werden.

Die Erfindung wird nachfolgend anhand eines Beispiels unter Bezugnahme auf die Zeichnungen näher erläutert; in dieser zeigt:
- Fig. 1: eine Stromversorgungsanordnung mit parallel geschalteten Stromversorgungen,
- Fig. 2: eine Stromversorgungsanordnung mit serieller Beschaltung der Ausgänge der Stromversorgungen,
- Fig. 3: eine Stromversorgungsanordnung mit voneinander unabhängingen Ausgängen,
- Fig. 4: eine Stromversorgungsanordnung, deren Steuereinheiten getrennte Ein- und Ausgänge für die Steuersignale aufweisen, und
- Fig. 5: die Signalverläufe von vier Stromversorgungen, die durch Pulsbreitenmodulation gesteuert werden.

In bestimmten Anwendungsfällen werden mehrere voneinander abhängig gesteuerte Stromversorgungen miteinander kombiniert. Dazu kommen sowohl eine parallelschaltung als auch eine Serienschaltung in Frage.

Bei einer Parallelschaltung kann neben einer höheren Zuverlässigkeit (N+1 Redundanz) der Gesamtstrom erhöht werden. Hier sollte die Lastaufteilung auf alle Stromversorgungen möglichst gleichmäßig erfolgen. Dadurch reduziert sich die Belastung einer jeden einzelnen Stromversorgung auf einen Minimalwert, wodurch sich wiederum die Zuverlässigkeit und die Lebensdauer erhöhen.

Bei einer Serienschaltung vergrößert sich die Ausgangsspannung der Stromversorgung. Auch hier ist eine möglichst gleichmäßige Spannungsaufteilung wünschenswert.

Bei bipolaren Stromversorgungen sollen die Beträge der Spannungen beider Polaritäten häufig gleich groß sein. Wird die Stromversorgung einer Polarität so stark belastet, daß durch die Strombegrenzung die Ausgangsspannung abgesenkt wird, so soll häufig die Stromversorgung der anderen Polarität eine Ausgangsspannung des gleichen, abgesenkten Betrages liefern. Neben diesen Beispielen sind eine Vielzahl anderer Fälle bekannt, in denen Stromversorgungen voneinander abhängig gesteuert werden sollen, und die nachfolgende Beschreibung gibt nur beispielhaft einige Anwendungsfälle wieder.

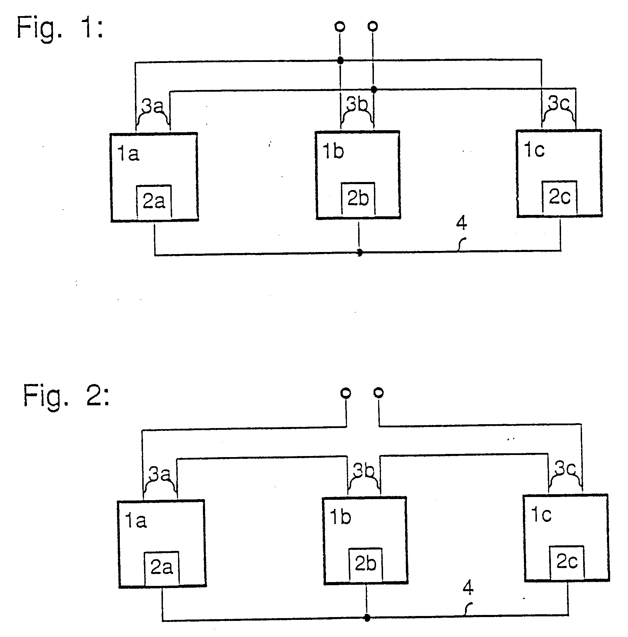

Figur 1 zeigt eine Stromversorgungsanordnung im Falle einer Parallelschaltung der Stromversorgungen. Es sind drei Stromversorgungen 1a, 1b, 1c vorgesehen, wobei die Anzahl der Stromversorgungen auch größer oder kleiner sein kann. Jede dieser Stromversorgungen 1a, 1b, 1c besitzt eine Steuereinheit 2a, 2 b, 2c, welche über einen gemeinsamen Bus 4 miteinander verbunden sind.

Figur 2 zeigt eine ähnliche Stromversorgungsanordnung, mit ebenfalls beispielshaft gewählten drei Stromversorgungen 1a, 1b, 1c, wobei die Ausgänge 3a, 3b, 3c der Stromversorgungen 1a, 1b, 1c in Serie geschaltet sind.

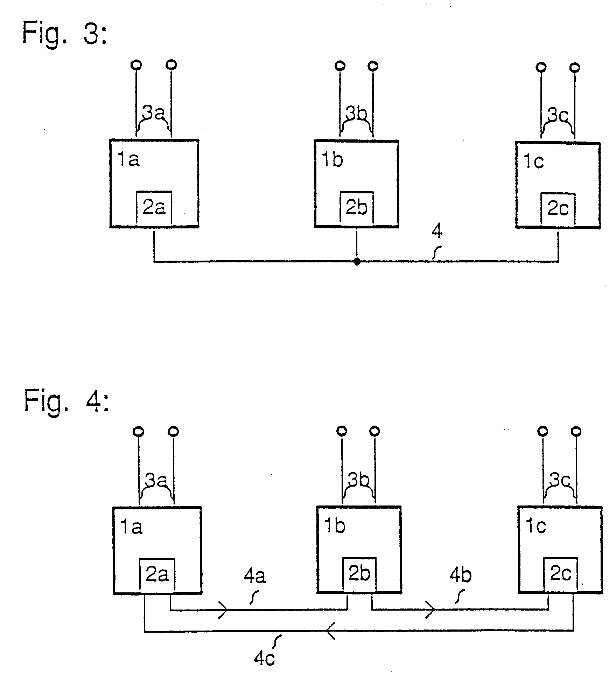

Figur 3 zeigt eine Stromversorgungsanordnung mit ebenfalls beispielhaft drei Stromversorgungen 1a, 1b, 1c, deren Ausgänge 3a, 3b, 3c voneinander unabhängig sind.

Sowohl die in Fig. 2 als auch die in Fig. 3 gezeigte Stromversorgungsanordnung weist jeweils einen gemeinsamen Bus 4 auf, der die Steuereinheiten 2a, 2b, 2c miteinander verbindet.

In Figur 4 ist eine Stromversorgungsanordnung gezeigt, die ebenfalls beispielhaft drei Stromversorgungen 1a, 1b, 1c besitzt und bei welcher die Ausgänge 3a, 3b, 3c der Stromversorgungen 1a, 1b, 1c unabhängig voneinander sind. Es ist aber auch denkbar, daß die Beschaltung der Ausgänge wie in den Beispielen der Figuren 1 oder 2 ausgeführt ist.

Zur Kommunikation der Steuereinheiten 2a, 2b, 2c der in Fig. 4 dargestellten Stromversorgungsanordnung ist ein Ringbus vorgesehen, der aus einzelnen Bus-Teilabschnitten 4a, 4b, 4c besteht. Jeweils ein Ausgang einer Steuereinheit ist mit dem Eingang der Steuereinheit einer anderen Stromversorgung verbunden. Der Bus-Teilabschnitt 4a verbindet den Ausgang der Steuereinheit 2a mit dem Eingang der Steuereinheit 2b, der Bus-Teilabschnitt 4b verbindet den Ausgang der Steuereinheit 2b mit dem Eingang der Steuereinheit 2c und der Bus-Teilabschnitt 4c verbindet den Ausgang der Steuereinheit 2c mit dem Eingang der Steuereinheit 2a. Auf diese Weise sind alle Stromversorgungen in der Form eines geschlossenen Rings miteinander verbunden.

Der Betrieb der beschriebenen Stromversorgungsanordnungen kann beispielsweise mittels einer Steuerung durch Pulsbreitenmodulation erfolgen. Dazu gibt die als sog. Master-Stromversorgung geschaltete Stromversorgung 1a einen Pulsrahmen, d.h. eine vorgegebene Periodendauer des Impulses, vor. Der Start des Pulsrahmens der Master-Stromversorgung gibt das Startsignal auch für die Pulsbreitenmodulatoren und die Oszillatoren aller anderen angeschlossenen Stromversorgungen 1b, 1c, um diese zu synchronisieren. Die Steuereinheit einer jeden Stromversorgung kann nun den Pulsrahmen, also die Periodendauer des Impulses, proportional zu der von der zugehörigen Stromversorgung abgegebenen Leistungen verkürzen. Damit wird allen anderen Stromversorgungen die maximale abgegebene Leistung signalisiert. Diese können nun ihrerseits entsprechend ihrer Ausgangsleistung justieren. Anstelle einer Verkürzung des Pulsrahmens ist auch eine entsprechende Verlängerung möglich. Ebenso ist die Polarität des Ausgangssignals frei wählbar. So kann die kürzestmögliche Impulsdauer als negative Spannung, z.B. als -10V, definiert werden, die mittlere Impulsdauer mit 0V und die längste Impulsdauer als positive Spannung, z.B. als +10V.

Da sich die Erfindung auf Stromversorgungen allgemeiner Art bezieht, ist diese sowohl auf Spannungsquellen, Stromquellen, Quellen mit konstanter Leistungsabgabe oder andere nach einheitlichen Kritierien geregelte Quellen zu übertragen. Daher sind in der vorhergehenden Erläuterung die Begriffe Strom, Spannung und Leistung, soweit sie die Ausgangsgrößen der Stromversorgungen betreffen, im weitesten Sinne austauschbar.

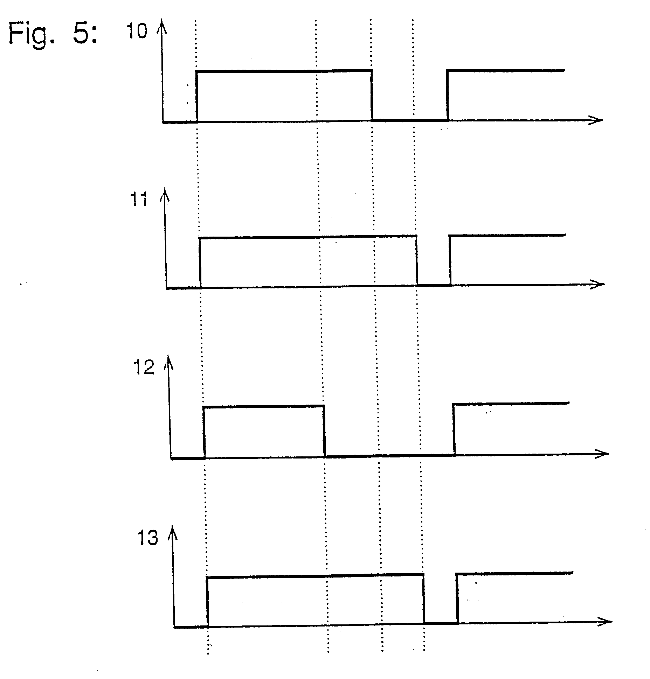

In Figur 5 sind Signale bzw. Impulse dargestellt, wie sie durch Pulsbreitenmodulation intern generiert bzw. übertragen werden. In einem solchen Fall ist die Impulserzeugung besonders einfach, da hierfür die häufig in Spannungsversorgungen bereits vorhandenen Pulsbreitenmodulatoren verwendet werden können.

Die Kurven 10, 11 und 12 zeigen beispielhaft die internen Signale der Pulsbreitenmodulatoren in den Stromversorgungen 1a, 1b, und 1c. Die Stromversorgung 1a liefert hier einen mittleren Wert, während die Stromversorgung 1b einen höheren Wert und die Stromversorgung 1c einen niedrigeren Wert liefert. Durch eine im Beispiel realisierte "Wiredor-Verknüpfung" kann die Stromversorgung mit dem längsten Zeitintervall auch das Bus-Signal 13 am längsten auf einem hohen Pegel halten. Dies ist im vorliegenden Beispiel das Signal 11 der Stromversorgung 1b. Dieses signalisiert damit den Stromversorgungen 1a und 1c die Größe ihrer Ausgangsleistung. Somit können diese ihre Ausgangsleistungen erhöhen. Als Folge davon wird sich dann die Ausgangsleistung der Stromversorgung 1b absenken. Dieser Regelvorgang ist dann beendet, wenn alle drei Signaldauern gleich groß sind und damit die drei abgegebenen Leistungen ebenfalls gleiche Werte besitzen.

## Patentansprüche

1. Stromversorgungsanordnung mit zumindest zwei voneinander abhängig gesteuerten Stromversorgungen, dadurch **gekennzeichnet,**
daß jede Stromversorgung (1a, 1b, 1c) eine Steuereinheit (2a, 2b, 2c) aufweist und
daß ein Bus (4) vorgesehen ist, über den die Steuereinheiten (2a, 2b, 2c) miteinander zum Austausch digitaler Signale verbunden sind.

2. Stromversorgungsanordnung nach Anspruch 1,
dadurch **gekennzeichnet,**
daß zumindest eine weitere Steuereinheit vorgesehen ist, die keiner Stromversorgung zugeordnet ist und die über den Bus (4) mit den anderen Steuereinheiten (2a, 2b, 2c) verbunden ist.

3. Stromversorgungsanordnung nach Anspruch 1 oder 2,
dadurch **gekennzeichnet,**
daß ein den Steuereinheiten (2a, 2b, 2c) gemeinsamer Bus (4) vorgesehen ist, über den die Steuereinheiten (2a, 2b, 2c) parallel miteinander verbunden sind.

4. Stromversorgungsanordnung nach Anspurch 1 oder 2,
dadurch **gekennzeichnet,**
daß der Bus (4) aus einzelnen Bus-Teilabschnitten (4a, 4b, 4c) besteht, die jeweils zwei Steuereinheiten (2a, 2b; 2b, 2c; 2c, 2a) seriell miteinander verbinden.

5. Stromversorgungsanordnung nach einem der vorhergehenden Ansprüche,
dadurch **gekennzeichnet,**
daß der Bus (4) als Parallelbus ausgebildet ist und mehrere parallele Busleitungen zur Kommunikation aufweist.

6. Stromversorgungsanordnung nach einem der Ansprüche 1 bis 4,
dadurch **gekennzeichnet,**
daß der Bus (4) als serieller Bus ausgebildet ist und eine oder zwei Leitungen, zur Kommunikation aufweist.

7. Stromversorgungsanordnung nach Anspruch 6,
dadurch **gekennzeichnet,**
daß die Steuereinheiten (2a, 2b, 2c) zur Erzeugung und Übertragung pulsbreitenmodulierter Signale über den Datenbus ausgebildet sind.

8. Stromversorgungsanordnung nach Anspruch 7,
dadurch **gekennzeichnet,**
daß eine der Stromversorgungen (1a, 1b, 1c) als Master-Stromversorgung (1a) ausgebildet ist und den Takt für alle anderen Stromversorgungen (1b, 1c) vorgibt.

9. Stromversorgungsanordnung nach einem der vorhergehenden Ansprüche,
dadurch **gekennzeichnet,**
daß zumindest eine Steuereinheit (2a, 2b, 2c) eine galvanische Trennung zum Bus (4) besitzt.

10. Stromversorgungsanordnung nach Anspruch 9,
dadurch **gekennzeichnet,**
daß die Steuereinheit durch Optokoppler galvanisch vom Bus getrennt ist.

11. Stromversorgungsanordnung nach Anspruch 9,
dadurch **gekennzeichnet,**
daß die Steuereinheit durch Übertrager galvanisch vom Bus getrennt ist.

12. Stromversorgungsanordnung nach Anspruch 9,
dadurch **gekennzeichnet,**
daß die Steuereinheiten elektro-optische Wandler zur galvanischen Trennung aufweisen und daß Lichtleiter zur Verbindung der Steuereinheiten vorgesehen sind.

13. Stromversorgungsanordnung mit zumindest zwei voneinander abhängig gesteuerten Stromversorgungen (1a, 1b, 1c), die jeweils eine Steuereinheit, (2a, 2b, 2c) aufweisen, welche mit einem System zum Austausch von Steuerzeichen miteinander verbunden sind,
dadurch **gekennzeichnet,**
daß die Steuerzeichen digitale Signale sind, die über einen Bus (4) zwischen den Steuereinheiten (2a, 2b, 2c) ausgetauscht werden, und
daß die Steuereinheiten (2a, 2b, 2c) über einen Bus zum Austausch digitaler Signale miteinander verbunden sind, und daß zumindest eine weitere Steuereinheit vorgesehen ist, die keiner Stromversorgung zugeordnet ist und die über den Bus (4) mit den anderen Steuereinheiten (2a, 2b, 2c) verbunden ist.
